(19)

**Europäisches Patentamt**
**European Patent Office**
**Office européen des brevets**

(11) **EP 4 703 509 A1**

(12) **EUROPEAN PATENT APPLICATION**

(43) Date of publication:
**04.03.2026 Bulletin 2026/10**

(21) Application number: **24197476.5**

(22) Date of filing: **30.08.2024**

(51) International Patent Classification (IPC):
**D06F 33/48** (2020.01)   **D06F 34/16** (2020.01)
**D06F 37/30** (2020.01)

(52) Cooperative Patent Classification (CPC):
**D06F 33/48; D06F 34/16;** D06F 37/304

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP USA, Inc.**
**Austin TX 78735 (US)**

(72) Inventors:
• **PROKOP, Libor**
  **75661 Roznov (CZ)**
• **LEPKA, Jaroslav**
  **75661 Roznov (CZ)**

(74) Representative: **Miles, John Richard**
  **NXP Semiconductors**
  **Intellectual Property Group**
  **The Cattle Barn, Upper Ashfield Farm**
  **Hoe Lane**
  **Romsey, Hampshire SO51 9NJ (GB)**

<u>Remarks:</u>
Amended claims in accordance with Rule 137(2) EPC.

(54) **BALANCED AND UNBALANCED LOAD DETECTION**

(57)   A method of estimating loads in a rotary machine comprising a drum containing a plurality of load portions and driven for rotation about a rotation axis by a motor, the method comprising estimating an unbalanced load by measuring a rotational speed of the drum during a first time period (501) over a first complete rotation of the drum while the motor is driven under constant torque control, determining a maximum speed angle during the first time period (501), measuring torque and rotational speed during a second time period (502) while the motor is driven under constant torque control, and calculating an unbalanced load from measurements of torque and rotational speed over the second time period and a difference in rotational speed over first and second halves of the second time period (502).

Fig. 5

**Description**

<u>Field</u>

The disclosure relates to detecting unbalanced and balanced loads in a rotary motor control application such as a washing machine.

<u>Background</u>

Operational safety of rotary motor control applications, for example in washing machines, requires detection of unbalanced loads during rotation. In a washing machine, an unbalanced load is caused by an uneven distribution of laundry inside the washing machine drum. When the unbalanced load increases above a certain limit, it can impact on the mechanical behaviour of the system, causing mechanical vibrations. In extreme cases this may result in the drum contacting the chassis, the washing machine moving and, in the worst case, damage to the machine, particularly at high drum speeds. The unbalanced load therefore needs to be measured and, if necessary, corrected before running the machine at high speeds. Another task for a washing machine is measurement of the total balanced and unbalanced weight of laundry inside the drum during operation.

Especially with increasing washer drum sizes, a reliable measure of unbalanced load is necessary. Detecting and correcting for an unbalanced load optimizes the washing cycle, saves money and improves operational safety.

<u>Summary</u>

According to a first aspect there is provided a method of estimating loads in a rotary machine comprising a drum containing a plurality of load portions and driven for rotation about a rotation axis by a motor, the method comprising: estimating an unbalanced load by:

i) measuring a rotational speed of the drum during a first time period over a first complete rotation of the drum while the motor is driven under constant torque control;
ii) determining a maximum speed angle during the first time period as a rotational angle of the drum over the first time period at which the rotational speed of the drum is a maximum;
iii) measuring torque and rotational speed during a second time period over a second complete rotation of the drum starting at the maximum speed angle offset by a predetermined advance angle while the motor is driven under constant torque control;
iv) calculating an estimated unbalanced load of the drum from measurements of torque and rotational speed over the second time period and a difference in rotational speed over first and second halves of the second time period.

The method enables calculation of an unbalanced load for a rotary machine using measurements of torque and speed control quantities during operation of the rotary machine.

The estimated unbalanced load $\Delta m$ may be calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, r is a radius of the drum, $g$ is a gravitational acceleration, $\omega_{01}$ is a rotational speed at the start of the second time period, $\omega_{02}$ is a rotational speed at the end of the second time period, $S_{180Ta_1}$ is a sum of torque samples over the first half of the second time period, $S_{180Ta_2}$ is a sum of torque samples over the second half of the second time period, $\Delta_{180}\widehat{\omega}_{\varepsilon A_1}$ is a difference in rotational speed over the first half of the second time period and $\Delta_{180}\widehat{\omega}_{\varepsilon A_2}$ is a difference in rotational speed over the second half of the second time period.

The predetermined advance angle $\alpha_{advanced}$ may be calculated as:

$$\alpha_{advanced} = \alpha(Speed\ Max) - \alpha_{11}(0) = \frac{N_b \cdot t_s \cdot \omega_{0x}}{2}$$

where $\alpha(Speed\ Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

The method may further comprise calculating an estimated balanced load m from:

$$m = \frac{t_s}{r^2} \cdot \frac{\omega_{02} \cdot S_{180Ta_2} - \omega_{01} \cdot S_{180Ta_1}}{\omega_{02} \cdot \Delta_{180}\widehat{\omega}_{\varepsilon A_2} - \omega_{01} \cdot \Delta_{180}\widehat{\omega}_{\varepsilon A_1}}$$

The method may further comprise calculating an estimated balanced load by:

i) measuring a torque during a third time period over a third complete rotation of the drum while the motor is driven under constant speed control to determine an average friction torque;
ii) measuring the torque and a rotation speed of the drum during a fourth time period over a fourth complete rotation of the drum while the motor is driven under constant acceleration control to determine an average acceleration torque;
iii) subtracting the average friction torque from the average acceleration torque to obtain a corrected average acceleration torque; and
iv) calculating the estimated balanced load of the drum from the corrected acceleration torque, a difference in rotation speed over the second time period and a radius of the drum.

The estimated balanced load $m$ of the drum may be calculated from:

$$m \cong \frac{t_s}{r^2} \cdot \frac{S_{360\,Tmd\varepsilon0_1}}{\Delta_{360}\omega_{\varepsilon0_1}}$$

where $t_s$ is a measurement sampling period, r is the radius of the drum, $S_{360\,Tmd\varepsilon0_1}$ is a sum of measured torque samples over the fourth time period and $\Delta_{360}\omega_{\varepsilon0_1}$ is the difference in rotation speed over the fourth time period.
Measuring the torque may comprise measuring an electric current through the motor and converting the measured electric current to a measure of torque, the torque optionally being measured as a linear function of the measured electric current.
The rotational speed and position may be derived from a rotational sensor on the rotor.
According to a second aspect there is provided a motor controller for a rotary machine comprising a drum for containing a plurality of load portions driven for rotation about a rotation axis by a motor, the motor controller being configured to estimate an unbalanced load on the drum by:

i) measuring a rotational speed of the drum during a first time period over a first complete rotation of the drum while the motor is driven under constant torque control;
ii) determining a maximum speed angle during the first time period as a rotational angle of the drum over the first time period at which the rotational speed of the drum is a maximum;
iii) measuring torque and rotational speed during a second time period over a second complete rotation of the drum starting at the maximum speed angle offset by a predetermined advance angle while the motor is driven under constant torque control;
iv) calculating an estimated unbalanced load of the drum from measurements of torque and rotational speed over the second time period and a difference in rotational speed over first and second halves of the second time period.

The estimated unbalanced load $\Delta m$ may be calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, $r$ is a radius of the drum (101), $g$ is a gravitational acceleration, $\omega_{01}$ is a rotational speed at the start of the second time period, $\omega_{02}$ is a rotational speed at the end of the second time period, $S_{180Ta_1}$ is a sum of torque samples over the first half of the second time period, $S_{180Ta_2}$ is a sum of torque samples over the second half of the second time period, $\Delta_{180}\widehat{\omega}_{\varepsilon A_1}$ is a difference in rotational speed over the first half of the second time period and $\Delta_{180}\widehat{\omega}_{\varepsilon A_2}$ is a difference in rotational speed over the second half of the second time period.
The predetermined advance angle $\alpha_{advanced}$ may be calculated as:

$$\alpha_{advanced} = \alpha(Speed\ Max) - \alpha_{11}(0) = \frac{N_b \cdot t_s \cdot \omega_{0x}}{2}$$

where $\alpha(Speed\ Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

wherein the motor controller is further configured to calculate an estimated balanced load m from:

$$m = \frac{t_s}{r^2} \cdot \frac{\omega_{02} \cdot S_{180Ta_2} - \omega_{01} \cdot S_{180Ta_1}}{\omega_{02} \cdot \Delta_{180}\widehat{\omega}_{\varepsilon A_2} - \omega_{01} \cdot \Delta_{180}\widehat{\omega}_{\varepsilon A_1}}$$

The motor controller may be further configured to calculate an estimated balanced load by:

i) measuring a torque during a third time period over a third complete rotation of the drum while the motor is driven under constant speed control to determine an average friction torque;
ii) measuring the torque and a rotation speed of the drum during a fourth time period over a fourth complete rotation of the drum while the motor is driven under constant acceleration control to determine an average acceleration torque;
iii) subtracting the average friction torque from the average acceleration torque to obtain a corrected average acceleration torque; and
iv) calculating the estimated balanced load of the drum from the corrected acceleration torque, a difference in rotation speed over the second time period and a radius of the drum.

The estimated balanced load $m$ of the drum may be calculated from:

$$m \cong \frac{t_s}{r^2} \cdot \frac{S_{360\ Tmd\varepsilon0_1}}{\Delta_{360}\omega_{\varepsilon0_1}}$$

where $t_s$ is a measurement sampling period, r is the radius of the drum, $S_{360\ Tmd\varepsilon0_1}$ is a sum of measured torque samples over the fourth time period and $\Delta_{360}\omega_{\varepsilon0_1}$ is the difference in rotation speed over the fourth time period.
According to a third aspect there is provided a rotary machine comprising a drum, an electric motor and a motor controller according to the second aspect, the drum connected to be driven about a horizontal axis by the electric motor under control of the motor controller. The rotary machine may be a washing machine.
According to a fourth aspect there is provided a computer program comprising instructions to cause a motor controller for a rotary machine to perform the method according to the first aspect.
There may be provided a computer program, which when run on a computer, causes the computer to configure a controller disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.
The computer program may be provided on a non-transitory computer readable medium, which may be a physical computer readable medium, such as a disc or a memory device, or may be embodied as a transient signal. Such a transient signal may be a network download, including an internet download.
These and other aspects of the invention will be apparent from, and elucidated with reference to, the embodiments described hereinafter.

Brief description of Drawings

Embodiments will be described, by way of example only, with reference to the drawings, in which:

Figure 1a is a schematic diagram of a washer drum with a balanced load;

Figure 1b is a schematic diagram of a washer drum with an unbalanced load;

Figure 2 is a schematic diagram of a washer drum with an equivalent unbalanced load;

Figure 3 is a schematic plot of speed, torque and drum angle as a function of rotation angle during a washer drum balanced weight detection procedure;

Figure 4 is a schematic plot of speed, torque and drum angle as a function of rotation angle during a washer drum unbalanced weight detection procedure;

Figure 5 is a further schematic plot of speed, torque and drum angle as a function of rotation angle during a washer drum unbalanced weight detection procedure;

Figures 6a and 6b are schematic diagrams illustrating an example process for determining balanced and unbalanced loads; and

Figure 7 is a schematic diagram of an assembly comprising a drum connected to an electric motor that is driven by a motor controller.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

Detailed description of embodiments

*Definitions*

The following terms or variables used throughout the detailed description are listed in Table 1 below, together with their corresponding meaning.

Table 1 - Terms/variables used in the specification.

| Term | Meaning |
|---|---|
| $B = r \cdot g(\sin \alpha_2 - \sin \alpha_1) = r \cdot g \cdot \Delta Sin$ | Constant |
| $\Delta m_{unbalanced}$ | Unbalanced mass |
| $\Delta m$ | Balanced mass |
| $\Delta_{(\alpha_1\alpha_3)}\omega_{\varepsilon 0}$ | Angular speed difference between drum (rotor) angle $\alpha_1$ and $\alpha_2$ positions |
| $\Delta_{180}\hat{\omega}_{\varepsilon A2}$ | Estimated angular speed difference of alternating acceleration between drum (rotor) angle $\alpha$ and $\alpha + 180$ positions |
| $\varepsilon$ | Angular acceleration |
| $\Delta_{(\alpha_1\alpha_2)}t = t_{\alpha 2} - t_{\alpha 1}$ | Time difference between drum (rotor) angles $\alpha_1$, $\alpha_2$ positions |
| $\Delta Sin = Sin(\alpha_2) - Sin(\alpha_1)$ | Sine function difference between drum (rotor) position angles $\alpha_1$ $\alpha_2$ |
| $F_c$ | Centrifugal force (N) |
| $F_g$ | Gravitational force (N) |
| g | Gravitational acceleration (ms$^{-2}$) |
| $Int_{TA\alpha 1\alpha 2}$ | Integral of alternating torque samples per drum (rotor) rotation interval from $\alpha_1$ to $\alpha_2$ |
| J | Mechanical inertia with radius $r_i$ |
| $m_i$ | Mass element $i$ |
| $m_r$, m | Balanced mass at radius r from rotating axis |
| $N_{360}$ | Number of samples per 360 degree drum (rotor) angle |
| r | Drum radius |
| $r_i$ | Radius of element $i$ from rotational axis |
| $S_{360\,T}$ | Sum of torque samples per 360 degree drum (rotor) rotation |

(continued)

| Term | Meaning |
|---|---|
| $S_{180\,Ta}(\alpha_{(k)})$ | Sum of alternating torque (average subtracted) samples per 180 degree drum (rotor) rotation at $\alpha_{(k)}$ step with iteration |
| $S_{180\,Ta}$ | Sum of alternating torque (average subtracted) samples per 180 degree drum (rotor) rotation |
| $t_s$ | Sampling time |
| $T_{AVG}$ | Average torque |
| $T_{AVG0}$ | Average torque at zero acceleration speed control |
| $T_g$ | Gravitation response torque |
| $T_d$ | Dynamic torque |
| $T_f$ | Frictional torque |
| $T_m$ | Motor torque |
| $T_{mD}$ | Motor torque direct component |
| $T_{mDf}$ | Motor torque direct friction component |
| $T_{mD\varepsilon 0}$ | Motor torque direct constant acceleration component |
| $T_{mA}$ | Motor torque alternating component |
| $\alpha_1$ | Rotor or drum angle 1 |

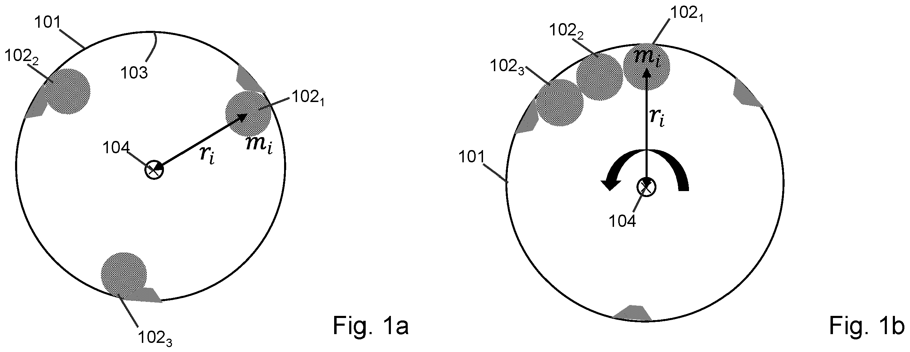

Figure 1a is a schematic diagram illustrating an example washer drum 101 with a balanced load comprising a plurality of load portions $102_{1\text{-}3}$ evenly positioned around an inner surface 103 of the drum 101, each load portion having a mass $m_i$, with the centre of each mass $102_{1\text{-}3}$ located at a radius $r_i$ from a rotational axis 104 of the drum 101. In a typical washer drum, the rotational axis 104 is oriented substantially horizontally in operation so that the load portions $102_{1\text{-}3}$ are effectively forced against the inner surface 103 of the drum 101 when the drum 101 is rotated at a sufficiently high rotational speed.

Figure 1b illustrates the washer drum 101 having an unbalanced load, with the load portions $102_{1\text{-}3}$ instead unevenly positioned around the inner surface 103 of the drum 101, in this example with the load portions $102_{1\text{-}3}$ bunched closely together. As the drum 101 rotates, this results in an unbalanced load on the rotational axis 104.

The balanced and unbalanced load may be represented by a balanced mass $m_{balanced}$, which is the mass that is equally distributed around the rotational axis 104 of the drum 101, and an unbalanced mass $\Delta m_{unbalanced}$, which is the part of the mass that is not balanced around the rotational axis 104.

With gravitational acceleration $g$ and a drum radius $r$, the force acting on the drum 101 by each mass m is affected by the centrifugal force $F_c$ and the gravitational force $F_g$. A minimum speed $speed_{min}$ may be defined where each load having a mass m remains on the inner surface 103 of the drum 101 due to centrifugal force, the centrifugal force defined as:

$$F_c = m\omega^2 r > F_g = mg$$

*Equation 1*

where $\omega$ is the rotational speed (in rad/s) of the drum 101. The minimum speed, in rpm, can then be defined as:

$$speed_{min} = \frac{60}{2\pi}\sqrt{\frac{g}{r}}$$

*Equation 2*

When the rotational speed of the drum 101 is greater than this minimum speed, the load inside the drum will stay on the inner surface 103.

The weight dynamics of the rotating system can be described with a mechanical inertia $J$, which is calculated from a sum of all mass elements $m_i$, each at a radius $r_i$ from the rotating axis, in which:

$$J = \sum_{i=1}^{N} m_i \cdot r_i^{\,2}$$

*Equation 3*

This can be recalculated as one imaginary balanced weight $m_r$ at a radius $r$ from the rotational axis 104 of the drum 101, simplifying Equation 3 to:

$$J = m_r \cdot r^2$$

*Equation 4*

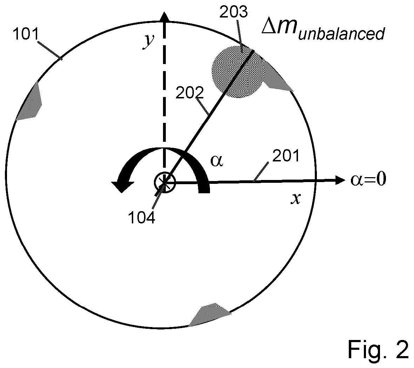

In the following, the balanced mass will be simply represented by $m$, while the unbalanced mass will be represented by $\Delta m_{unbalanced}$, or simply $\Delta m$. This is illustrated schematically in Figure 2.

Washer drums are typically designed such that that there is a stable rotational speed region slightly above $speed_{min}$, so the calculations can be simplified with a stable drum axis. When the drum axis 104 is stable, the drum unbalanced mass (with a horizontal rotational axis 104) can be described with a gravitation response torque $T_g$ as:

$$T_g = \vec{g} X \sum m_i \vec{r_i}$$

*Equation 5*

This may be simplified using the equivalent unbalanced mass $\Delta m_{unbalanced}$ as:

$$T_g = -g \cdot \Delta m_{unbalanced} \cdot cos(\alpha)$$

*Equation 6*

where a is the angle between the horizontal axis $x$ 201 orthogonal to the rotational axis 104 and a radius 202 from the horizontal axis 104 to the centre of the unbalanced mass 203.

In following, the unbalanced mass is simplified to $\Delta m = \Delta m_{unbalanced}$.

When the drum 101 is driven with a motor, the torque acting on the motor can be expressed as a sum of torque components:

$$T_d + T_g + T_f = T_m$$

*Equation 7*

where $T_d$ is the dynamic torque, $T_g$ is the gravitational torque $T_f$ is the friction torque, and $T_m$ the total motor torque.

For an angular acceleration $\varepsilon$, the dynamic torque $T_d$ can be expressed as:

$$J \cdot \varepsilon = -\Delta m \cdot r \cdot g \cdot cos(\alpha) - T_f + T_m$$

*Equation 8*

Defining drum (or rotor) position angles $\alpha_1, \alpha_2, \alpha_3$:

$$\alpha_2 = \alpha_1 + 180^o$$

$$\alpha_3 = \alpha_1 + 360^o$$

*Equation 9*

The direct motor torque $T_{mD}$ can be defined as:

$$T_{mD} = \frac{1}{\Delta_{(\alpha_1\alpha_3)}t} \int_{t_{\alpha_1}}^{t_{\alpha_3}} T_m \, dt = T_{mD\varepsilon0} + T_{mDf}$$

*Equation 10*

The alternating motor torque $T_{mA}$ can be defined as:

$$T_{mA} = T_m - T_{mD}$$

*Equation 11*

The motor torque $T_m$ may be split into direct acceleration torque $T_{mD\varepsilon}$ and alternating acceleration torque $T_{mA\varepsilon}$ with a friction compensation component $T_{mf}$, such that:

$$T_m = T_{mA\varepsilon} + T_{mD\varepsilon} + T_{mf}$$

*Equation 12*

For constant $\varepsilon_0$ and alternating $\varepsilon_A$ accelerations:

$$J \cdot \varepsilon_A + J \cdot \varepsilon_0 = -\Delta m \cdot r \cdot g \cdot \cos(\alpha) + T_{mA\varepsilon} - T_f + T_{mf} + T_{mD\varepsilon}$$

*Equation 13*

The motor friction compensation torque $T_{mf}$ is equal to the friction torque $T_f$ i.e.:

$$0 = -T_f + T_{mf}$$

*Equation 14*

At constant acceleration $\varepsilon_0$ a direct acceleration torque $T_{mD\varepsilon0}$ may be defined as:

$$J \cdot \varepsilon_0 = T_{mD\varepsilon0}$$

*Equation 15*

For the direct friction compensation motor torque $T_{mDf}$:

$$\int_{\alpha_1}^{\alpha_3} T_f = \int_{\alpha_1}^{\alpha_3} T_{mf} \, dt = \int_{\alpha_1}^{\alpha_3} T_{mDf} \, dt$$

*Equation 16*

For the constant acceleration speed difference caused by the direct torque component:

$$J \cdot \Delta_{(\alpha_1 \alpha_3)} \omega_{D\varepsilon 0} = \int_{\alpha_1}^{\alpha_3} T_{mD\varepsilon 0} \, dt$$

$$J \cdot \Delta_{360} \omega_{D\varepsilon 0} \cong \int_{\alpha_1}^{\alpha_1 + 360} T_{mD\varepsilon 0} \, dt$$

*Equation 17*

From Equations 17, 16 and 10, for a 360 degree interval:

$$J \cdot \Delta_{(\alpha_1 \alpha_3)} \omega_{D\varepsilon 0} = \int_{\alpha_1}^{\alpha_3} T_{mD\varepsilon 0} \, dt \cong \int_{\alpha_1}^{\alpha_3} (T_{mD} - T_{mDf}) dt = \int_{\alpha_1}^{\alpha_3} (T_m - T_{mDf}) dt$$

*Equation 18*

The speed difference $\Delta_{(\alpha_2 \alpha_3)} \omega$ between the drum (or rotor) position angles $\alpha_2$ and $\alpha_3$ may be defined as:

$$\Delta_{(\alpha_2 \alpha_3)} \omega = \omega_{\alpha 3} - \omega_{\alpha 2}$$

*Equation 19*

The time difference $\Delta_{(\alpha_2 \alpha_3)} t$ of spinning the drum between the two position angles $\alpha_2$ and $\alpha_3$ may be defined as:

$$\Delta_{(\alpha_2 \alpha_3)} t = t_{\alpha 3} - t_{\alpha 2}$$

*Equation 20*

Defining the drum (or rotor) rotation angles $\alpha_1$, $\alpha_2$, $\alpha_3$ with $\alpha_2$ between $\alpha_1$ and *a3:*

$$\Delta_{(\alpha_2 \alpha_3)} t = \frac{1}{2} \cdot \Delta_{(\alpha_1 \alpha_3)} t$$

*Equation 21*

At an angular speed with a low variation around a speed $\omega_0$:

$$\Delta_{(\alpha_2 \alpha_3)} \omega_{\varepsilon 0} \cong \frac{1}{2} \cdot \Delta_{(\alpha_1 \alpha_3)} \omega_{\varepsilon 0}$$

*Equation 22*

The motor torque $T_m$ is usually a function of the motor input current vector, *I*, i.e.:

$$T_m = f(I)$$

*Equation 23*

When the friction position dependence is either constant or periodic with a period of $\Delta_{(\alpha 2 \alpha 3)} t$, from Equations 11, 12, 14 and 16 the alternating acceleration components $T_{mA\varepsilon}$ can be expressed as:

$$T_{mA\varepsilon} \cong T_m - T_{mD\varepsilon} - T_{mDf} = T_m - T_{mD} = T_{mA}$$

*Equation 24*

Based on Equations 13, 14, 15, 17 and 24, we can integrate to obtain the relationship:

$$J \cdot \varepsilon_A \cdot \frac{d\alpha}{d\alpha} dt \cong -\Delta m \cdot r \cdot g \cdot \cos(\alpha) \frac{d\alpha}{d\alpha} dt + T_{mA} \frac{d\alpha}{d\alpha} dt$$

*Equation 25*

When the drum (or rotor) angular speed variation is low compared to the angular speed, we can use $\omega_0$, resulting in the following:

$$J \cdot \varepsilon_A \, dt \cong -\Delta m \cdot r \cdot g \cdot \cos(\alpha) \cdot \frac{1}{\omega_0} d\alpha + T_{mA} dt$$

*Equation 26*

After integration between defined position angles $\alpha_1$ and $\alpha_2$:

$$J \cdot \Delta_{(\alpha_1\alpha_2)}\omega_A \cong -\Delta m \cdot r \cdot g \cdot \frac{1}{\omega_0} (\sin(\alpha_3) - \sin(\alpha_2)) + \int_{\alpha_2}^{\alpha_3} T_{mA} \, dt$$

*Equation 27*

For the alternating part of the angular speed difference:

$$\Delta m \cdot r \cdot g \cdot \frac{1}{\omega_0} (\sin(\alpha_3) - \sin(\alpha_2)) \cong -J \cdot \Delta_{(\alpha_2\alpha_3)}\omega_A + \int_{\alpha_2}^{\alpha_3} T_{mA} \, dt$$

*Equation 28*

When using the angular difference of constant acceleration $\Delta_{(\alpha_1\alpha_2)}\omega_{\varepsilon0} \cong \frac{1}{2} \cdot \Delta_{(\alpha_1\alpha_3)}\omega_{\varepsilon0}$ from Equation 22:

$$J \cdot \Delta_{(\alpha_2\alpha_3)}\omega_A = J \cdot (\Delta_{(\alpha_2\alpha_3)}\omega - \frac{1}{2} \cdot \Delta_{(\alpha_1\alpha_3)}\omega_{D\varepsilon0})$$

*Equation 29*

From Equations 28, 29 and 12:

$$\Delta m \cdot r \cdot g \cdot \frac{1}{\omega_0} (\sin(\alpha_3) - \sin(\alpha_2))$$
$$\cong -J \cdot (\Delta_{(\alpha_2\alpha_3)}\omega - \frac{1}{2} \cdot \Delta_{(\alpha_1\alpha_3)}\omega_{D\varepsilon0}) + \int_{\alpha_2}^{\alpha_3} (T_m - T_{mD}) dt$$

*Equation 30*

The difference between the sine of angle $\alpha_3$ and angle $\alpha_2$, $\Delta_{(\alpha 2 \alpha 3)}Sin$ can be defined as:

$$\Delta_{(\alpha_2 \alpha_3)}Sin = sin(\alpha_3) - sin(\alpha_2)$$

*Equation 31*

When appropriate drum (or rotor) position angle intervals are used, a minimum sine function difference can be defined as the following:

$$min(sin(\alpha_3) - sin(\alpha_2)) = -2 \Leftrightarrow \alpha_2 = \frac{\pi}{2} = 90deg, \alpha_3 = \frac{3\pi}{2} = -\frac{\pi}{2} = -90deg$$

*Equation 32*

A corresponding maximum sine function difference can be defined as:

$$max(sin(\alpha_3) - sin(\alpha_2)) = 2 \Leftrightarrow \alpha_2 = -\frac{\pi}{2} = -90deg, \ \alpha_3 = \frac{\pi}{2} = 90deg$$

*Equation 33*

Or a zero function:

$$0 = (sin(\alpha_3) - sin(\alpha_1)) \Leftrightarrow \alpha_1 = -\frac{\pi}{2} = -90deg, \ \alpha_3 = \frac{3\pi}{2} = -\frac{\pi}{2} = -90deg$$

*Equation 34*

For the alternating part of the angular speed difference, the optimum sensitivity and the maximum/minimum value of Equation 30 is when, according to Equations 32 and 33:

$$\Delta_{(-90, \ 90)}Sin = 2$$

or

$$\Delta_{(90,-90)}Sin = -2$$

*Equation 35*

The physical meaning of Equation 34 is that only the constant acceleration component $\Delta_{(\alpha 1 \alpha 3)}\omega_{D\varepsilon 0}$ results from one drum rotation, i.e. integrating the dynamic torque expressed in Equation 8 over one complete rotation results in Equation 18.

From integrating intervals between drum (or rotor) angles $\alpha_2$ and $\alpha_3$, we can define time discrete sum functions as follows:

$$Int_{TA\alpha 2\alpha 3} = \int_{t\alpha_2}^{t\alpha_3} T_{mA}(t) \, dt \cong t_s \sum_{n\alpha_2}^{n\alpha_3} T_{mA}(n) = t_s \cdot S_{TA\alpha 2\alpha 3}$$

*Equation 36*

*Balanced mass measurement method 1*

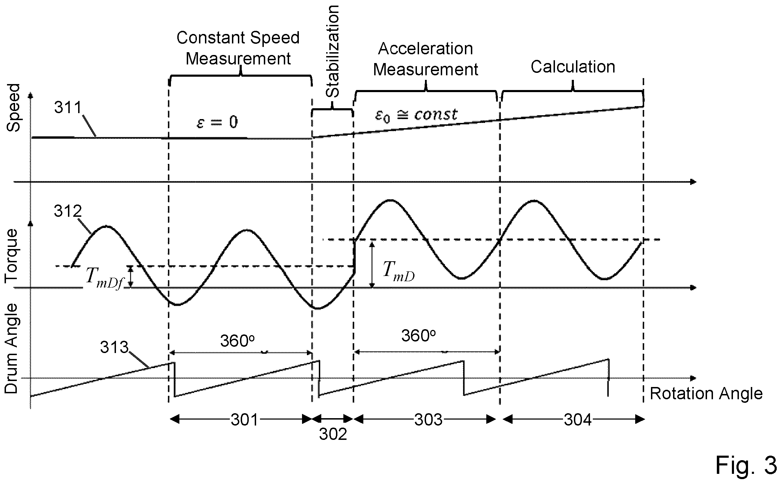

A plot illustrating an example first balanced mass measurement process is shown in Figure 3. This indicates measurements of speed 311, torque 312 and drum angle 313. The process to determine the balanced mass comprises two steps. A first step involves a constant speed measurement with zero acceleration over a first time period 301 covering a complete drum rotation, i.e. a rotation of 360°. This measurement is then used to determine an average friction torque $\tilde{T}_{mDf}$ = $T_{AVG0}$. In a second step, which optionally follows a stabilization period 302 during which the constant speed control in the first time period 301 is switched to constant acceleration control, in a second time period 303 the drum is driven over another complete drum rotation to obtain a constant acceleration, i.e. $\varepsilon_0$ = *const,* while measuring the torque provided. This results in an average direct torque $\tilde{T}_{mD}$ = $T_{AVG}$.

From Equation 17 and for discrete operation with a sampling time $t_s$, i.e. the time between successive samples:

$$J \cdot \Delta_{360}\omega_{\varepsilon 0} \cong t_s \cdot S_{360\,TmD\varepsilon 0_1}$$

*Equation 37*

The average torque $T_{AVG}$ can be calculated from motor torque samples $T_n$ over a 360 degree drum (rotor) rotation with $N_{360}$ samples, such that:

$$T_{AVG} = \frac{\sum_{n(\alpha_1)}^{n(\alpha_1+360)} T_n}{N_{360}} = \frac{S_{360\,T}}{N_{360}}$$

*Equation 38*

The average torque $T_{AVG}$ is approximately equal to the friction torque component $T_{mDf}$ plus a constant acceleration torque $T_{mD\varepsilon 0}$, i.e.:

$$T_{AVG} \cong T_{mD} = T_{mDf} + T_{mD\varepsilon 0}$$

*Equation 39*

During the zero acceleration measurement phase in the first time period 301, in which the rotational speed is kept constant, the acceleration torque is zero, i.e.:

$$T_{mD\varepsilon 0} = 0$$

*Equation 40*

The average torque at zero acceleration therefore approximately equals the average friction torque, i.e.:

$$T_{AVG0} \cong \tilde{T}_{mDf}$$

*Equation 41*

During the constant acceleration measurement phase over the second time period 303:

$$T_{mD\varepsilon 0} = T_{mD} - \tilde{T}_{mDf} \cong T_{AVG} - T_{AVG0}$$

*Equation 42*

The imaginary load inertia $J$ as per Equation 4 above is given by $J = m_r \cdot r^2$. From Equations 4 and 37, an estimate of the balanced mass $m$ can be calculated as:

$$m \cong \frac{t_s}{r^2} \cdot \frac{S_{360\,Tmd\varepsilon0_1}}{\Delta_{360}\omega_{\varepsilon0_1}}$$

*Equation 43*

where the torque sum over a 360° rotation, $S_{360\,Tmd\varepsilon0_1}$, is based on Equation 42:

$$S_{360\,Td\varepsilon0_1} = \sum_{n(\alpha_1)}^{n(\alpha_1+360)} (T_n - T_{AVG0})$$

*Equation 44*

The difference in rotational speed, $\Delta_{360}\omega_{\varepsilon0_1}$, over the 360° rotation in the second time period 303, i.e. where the angle increases from $\alpha_1$ to $\alpha_1$ + 360 is given by:

$$\Delta_{360}\omega_{\varepsilon0} \cong \omega_{(\alpha1+360)} - \omega_{(\alpha1)}$$

*Equation 45*

The estimated balanced mass of the drum may then be calculated during a third time period 304 following the second time period 303.

*Unbalanced* mass *measurement and balanced* mass *measurement method 2*

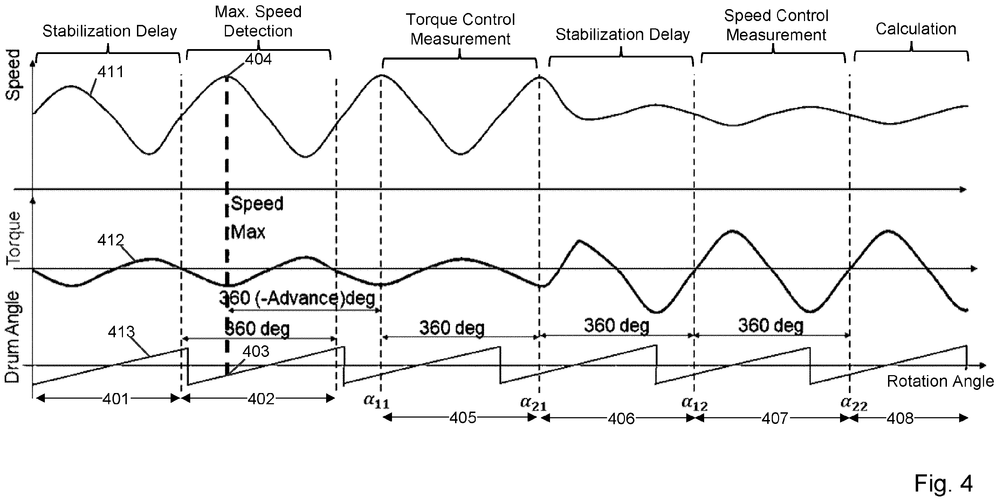

A plot illustrating an example procedure for determining an unbalanced mass of the drum is shown in Figure 4, which shows measures of speed 411, torque 412 and drum angle position 413 as a function of time. In an initial optional stabilization time period 401, the motor is set for torque control and the speed cycle is stabilized for at least one rotation of the drum.

Following stabilization, over a first time period 402 the motor is controlled for constant torque and a rotational speed 411 of the drum and applied torque are measured over a complete 360° drum rotation. The angle 403 at which a maximum rotational speed 404 is detected is determined over the first time period 402. An offset drum position angle is then calculated based on the position angle of maximal detected speed 404. The next measurement sequence then starts when the position of the drum reaches the maximum detected speed angle plus the offset. The offset angle may be 360°, optionally minus an advance angle, i.e. the start of the next measurement sequence may be at a drum angle of $\alpha_{\omega max}$ + 360 - $\alpha_{advanced}$. In Figure 4 this angle is indicated by $\alpha_{11}$. During a second time period 405 starting from this angle, the motor is operated for constant torque and a torque control measurement cycle is carried out over a further complete rotation, i.e. a further 360° rotation. At the end of this second time period 405, the motor control is set to speed control. Following a further stabilization period 406, a speed control measurement is carried out over a third time period 407, which begins with the drum at the same offset drum position angle, indicated in Figure 4 as $\alpha_{12}$. The drum is then rotated over a complete rotation, i.e. a further 360° rotation, following which the unbalanced mass is calculated during a calculation period 408.

As depicted in Figure 4, constant torque control during the second time period 405 results in a higher speed variation and a lower torque variation, while constant speed control in the third time period 407 results in a lower speed variation and a higher torque variation. Although the control in each time period 405, 407 is nominally controlling for a constant torque or speed, such control is in practice generally not realistically achievable and some variation in the parameter being controlled does occur. The measurement method described herein also covers this variation.

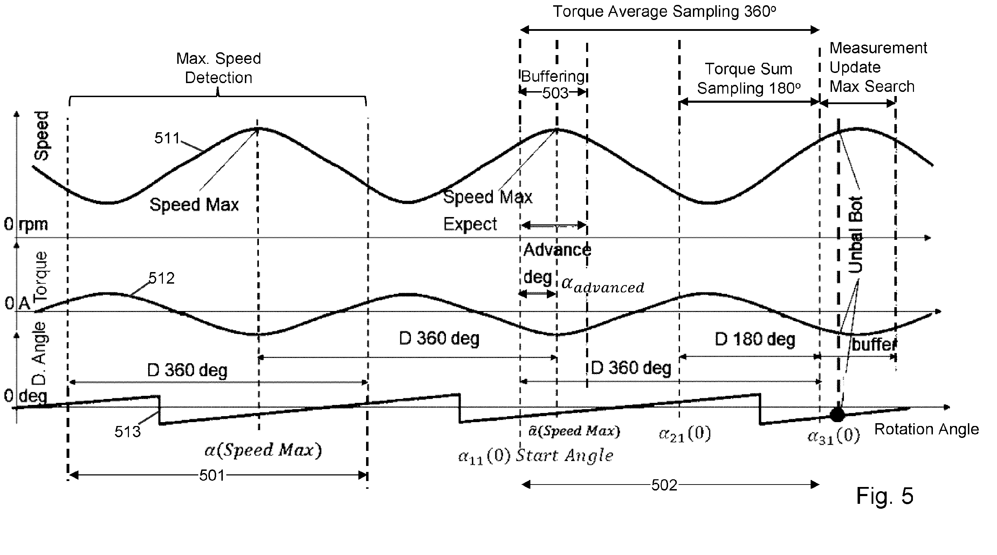

Figure 5 illustrates an example sequence of operations showing a maximum speed detection, followed by a torque control measurement, following which the unbalanced mass is calculated. As with Figure 4, speed 511, motor torque 512 and drum angle 513 are shown as a function of rotation angle.

During a first time period 501 covering a complete drum rotation, the drum is driven under constant torque control and an angle is determined at which a maximum speed is obtained. The maximum speed angle is then stored. A further measurement cycle is then started when the drum again reaches the maximum speed angle, optionally offset by an advance angle, i.e. when the drum reaches the angle $\alpha_{\omega max}$ + 360 - $\alpha_{advanced}$. The advance angle may be determined based on Equation 66 below. A buffering period 503 after the start of a second time period 502 is determined by the number Nb of buffered samples and the angular speed. The buffering period 503 starts before the expected maximum speed in the second time period 502.

During the second time period 502, the torque is sampled over a further complete rotation of the drum, which includes a sampling period over a second half of the second time period 502 covering a 180° rotation of the drum.

During the time period 502, each torque sample is added to a $S_{360\,T}$ sum, i.e. a sum of torque samples over the second time period covering a complete rotation of the drum, which is stored for later use.

After a 180 degrees of rotation, the torque sum 180 degree $S_{180\,T}$ calculation and torque and rotor angular speed buffering starts, Each torque sample is add into the sum $S_{180\,T}(n+1) = S_{180\,T}(n) + T(n_\alpha)$. and buffered $T_{BUF}(\alpha_{(n)}) = T(n_\alpha)$. Speed measurements are also buffered as $\omega_{BUF}(n) = \omega(n(\alpha))$.

Torque and speed measurement buffering is provided during Nb samples, which determines the searching/-buffering angle $\alpha$. The buffered samples can then be used for a Maximal search state.

After the end of the second time period 502, the average torques over the second time period and the first approach of second half of the second time period are determined. The 360 degree torque sum $S_{360}$ is stored for an average torque calculation

Following the second time period 502, the torque sum over 180 degree $S_{180\,T}$ is updated with new torque T(n) samples and the buffered samples $T_{BUF}(\alpha_{(n)})$ from the beginning of the previous steps are subtracted according to Equation 68, i.e. $S_{180Ta}(\alpha_{(k)}) = S_{180Ta}(\alpha_{(k-1)}) + (T(\alpha_{(k)}) - T_{AVG} - T_{BUF}(\alpha_{(k)} - 180))$.

The Equation 65 function (see below) maximum is searched and 180 degree the $S_{180Ta}(\alpha_{(k)})$ sum and $\Delta_{180}\hat{\omega}_{\varepsilon A}(\alpha_k)$ at the Equation 65 maximum are stored, to be used for final calculations. The search is provided at Nb of buffered samples. From Figure 2 and Equation 6, it can be proved that the maximum of the function from Equation 65 will be at -90 degrees of the unbalanced weight position.

Calculation of Unbalanced Mass

$$Int_{180\,Ta} = Int_{TA\alpha2\alpha3} = \int_{\alpha_2}^{\alpha_3} T_{mA}\,dt = \int_{\alpha_2}^{\alpha_3} (T_m - T_{mD})dt$$

*Equation 46*

The sum of torque samples per angle from $n(\alpha_1 + 180)$ to $n(\alpha_1 + 360)$ which gives the alternating torque component:

$$S_{180\,Ta} = S_{TA\alpha2\alpha3} = \sum_{n(\alpha_1+180)}^{n(\alpha_1+360)} (T(n) - T_{AVG})$$

$$= \sum_{n(\alpha_1+180)}^{n(\alpha_1+360)} (T(n) - \frac{N_{180}}{N_{360}} \cdot \sum_{n(\alpha_1)}^{n(\alpha_1+360)} T_n$$

*Equation 47*

$$S_{360\,T} = \sum_{n(\alpha_1)}^{n(\alpha_1+360)} T(n)$$

*Equation 48*

**14**

$$S_{180\,T} = \sum_{n(\alpha_1+180)}^{n(\alpha_1+360)} T(n)$$

*Equation 49*

The weight detection algorithm provides two measurements, a first under torque control and a second under speed control.

We can define position angles for torque $\alpha_{11}$ $\alpha_{21}$ and speed $\alpha_{12}$ $\alpha_{22}$ measurements as:

$$\alpha_{12} = \alpha_{11} + k \cdot 360$$

$$\alpha_{22} = \alpha_{21} + k \cdot 360$$

*Equation 50*

So the two measurements are made at the same drum (rotor) angular position plus a $k_{th}$ rotation.

Based on Equation 28 we can define

$$\Delta\omega_x = \Delta_{(\alpha_{2x}\alpha_{3x})}\omega_A \cong \Delta_{180}\widehat{\omega}_{\varepsilon A}$$

$$\omega_{0x} = \omega_0$$

*Equation 51*

And for the $Int_{TA\alpha2x\alpha3x}$ from Equation 36:

$$Int_{TAx} = Int_{TA\alpha2x\alpha3x}$$

$$S_{TAx} = S_{TA\alpha2x\alpha3x}$$

*Equation 52*

$$\Delta Sin_x = sin(\alpha_{3x}) - sin(\alpha_{2x})$$

*Equation 53*

Then for the two measurements under torque control and speed control:

$$B = r \cdot g(\sin\alpha_3 - \sin\alpha_2) = r \cdot g \cdot \Delta Sin$$

$$\Delta m \cdot B_1 = -\omega_{01} \cdot J \cdot \Delta\omega_1 + \omega_{01} \cdot Int_{TA1}$$

$$\Delta m \cdot B_2 = -\omega_{02} \cdot J \cdot \Delta\omega_2 + \omega_{02} \cdot Int_{TA2}$$

*Equation 54*

Based on Equation 54, when Equation 52 $\Delta Sin_1 = \Delta Sin_2 = \Delta Sin$

$$\Delta m \cdot B_1 = \Delta m \cdot B_2$$

*Equation 55*

And so for load inertia

$$J = \frac{\omega_{02} \cdot Int_{TA2} - \omega_{01} \cdot Int_{TA1}}{\omega_{02} \cdot \Delta\omega_2 - \omega_{01} \cdot \Delta\omega_1}$$

*Equation 56*

And for the unbalanced mass:

$$\Delta m = \frac{\omega_{01} \cdot \omega_{02}}{r \cdot g \cdot \Delta Sin} \cdot \frac{\Delta\omega_2 \cdot Int_{TA1} - \Delta\omega_1 \cdot Int_{TA2}}{\omega_{02} \cdot \Delta\omega_2 - \omega_{01} \cdot \Delta\omega_1}$$

*Equation 57*

The measurement calculations are based on following formulas.
The angular speed difference between a 180 degree drum (rotor) position angle from $\alpha_1 + 180$ to $\alpha_1 + 360$ is given by:

$$\Delta_{180}\widehat{\omega}_{\varepsilon A} = \Delta_{180}\omega - \frac{1}{2} \cdot \Delta_{360}\omega_{\varepsilon 0} = \omega_{(\alpha1+360)} - \omega_{(\alpha1+180)} - \frac{1}{2} \cdot \Delta_{360}\omega_{\varepsilon 0}$$

*Equation 58*

And so:

$$\Delta_{180}\widehat{\omega}_{\varepsilon A} = \frac{1}{2} \cdot \omega_{(\alpha1+360)} - \omega_{(\alpha1+180)} + \frac{1}{2} \cdot \omega_{(\alpha1)}$$

*Equation 59*

The unbalanced mass Δm can thereby be calculated in the time discrete domain as:

$$\Delta m = \frac{t_s}{r \cdot g \cdot \Delta Sin} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

*Equation 60*

as can be derived from Equation 57.
When Δ*Sin* = -2 is substituted into Equation 56:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

*Equation 61*

When the rotation speeds $\omega_{01}$, $\omega_{02}$ are calculated within a 360° drum (rotor) rotation, $\alpha_{1x}$, $\alpha_{3x} = \alpha_{1x} + 360$:

$$\omega_{0x} = \frac{2 \cdot \pi}{t_s \cdot \Delta N_{360\,x}}$$

*Equation 62*

In a software implementation:

$$\Delta m = \frac{-\pi}{r \cdot g} \cdot \frac{1}{\Delta N_{360\,1}} \cdot \frac{1}{\Delta N_{360\,2}} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\frac{1}{\Delta N_{360\,2}} \cdot \Delta_{180}\widehat{\omega}_{\varepsilon A_2} - \frac{1}{\Delta N_{360\,1}} \cdot \Delta_{180}\widehat{\omega}_{\varepsilon A_1}}$$

*Equation 63*

Due to $\Delta Sin = -2$ in Equation 61, searching the maximum of:

$$abs(sin(\alpha_2) - sin(\alpha_1)) = abs(\Delta Sin) = 2$$

*Equation 64*

is necessary to determine a correct unbalanced load $\Delta m$.
Based on Equations 54, 64 and 36, the maximum of the iteration function

$$F(k) = abs\left(\widehat{m}_{est} \cdot \Delta_{180}\widehat{\omega}_{\varepsilon A}(\alpha_k) - \frac{t_s}{r^2} \cdot S_{180Ta}(\alpha_{(k)})\right)$$

*Equation 65*

is searched over a defined number of Nb samples.
The searching angle $\alpha$ depends on the number Nb of samples and the angular speed. The searching starts at the advanced angle position before the periodical speed maximum.

$$\alpha_{advanced} = \alpha(Speed\ Max) - \alpha_{11}(0) = \frac{N_b \cdot t_s \cdot \omega_{0x}}{2}$$

*Equation 66*

The torque and angular speed at the beginning of the 180 degree measurement is buffered with this defined number of samples Nb. At the end of the 180 degree measurement, the angular speed difference and torque sum are updated with the buffered samples, and new samples. When the F(k) maximum is evaluated, the $\Delta\omega(\alpha_{kmax})$ and $S_{AC180}(\alpha_{(kmax))}$. This way the $abs(\Delta Sin) = 2$ is obtained.
The angular speed difference between 180 degree angle iteration:

$$\Delta_{180}\widehat{\omega}_{\varepsilon A}(\alpha_k) = \omega(\alpha_k) - \omega_{BUF}(\alpha_k - 180) - \frac{1}{2} \cdot (\omega_{(\alpha1+360)} - \omega_{(\alpha1)})$$

*Equation 67*

The torque sum difference between 180 degree angle iterations is given by:

$$S_{180Ta}(\alpha_{(k)}) = S_{180Ta}(\alpha_{(k-1)}) + \left(T(\alpha_{(k)}) - T_{AVG} - T_{BUF}(\alpha_{(k)} - 180)\right)$$

*Equation 68*

Balanced Mass Calculation: Method 2 (Alternative)

As can be derived from Equation 56:

$$m = \frac{t_s}{r^2} \cdot \frac{\omega_{02} \cdot S_{180Ta2} - \omega_{01} \cdot S_{180Ta1}}{\omega_{02} \cdot \Delta_{180}\widehat{\omega}_{\varepsilon A2} - \omega_{01} \cdot \Delta_{180}\widehat{\omega}_{\varepsilon A1}}$$

*Equation 69*

Therefore, based on the unbalanced load process it is also possible to calculate the balanced load. The precision of this method is, however, dependent on $\Delta m$. When $\Delta m$ is too small, the balanced load based on Equation 69 is less precise. The first method may, however, be used to determine the balanced load instead.
A software implementation in the time discrete domain is given as:

$$m = \frac{t_s}{r^2} \cdot \frac{\frac{1}{\Delta N_{360\_2}} \cdot S_{180Ta2} - \frac{1}{\Delta N_{360\_1}} \cdot S_{180Ta1}}{\frac{1}{\Delta N_{360\_2}} \cdot \Delta_{180}\widehat{\omega}_{\varepsilon A2} - \frac{1}{\Delta N_{360\_1}} \cdot \Delta_{180}\widehat{\omega}_{\varepsilon A1}}$$

*Equation 70*

Torque Calculation

In the case of an electronic motor controller it is straightforward to calculate motor torque based on measured motor current, i.e.:

$$T_m = f(I)$$

*Equation 71*

In the example case of field oriented control of a PMS motor, the torque is almost linear with the torque rotating current component, i.e.:

$$T_m = const \cdot I_q$$

*Equation 72*

Balanced and Unbalanced Mass Measurement: State Machines

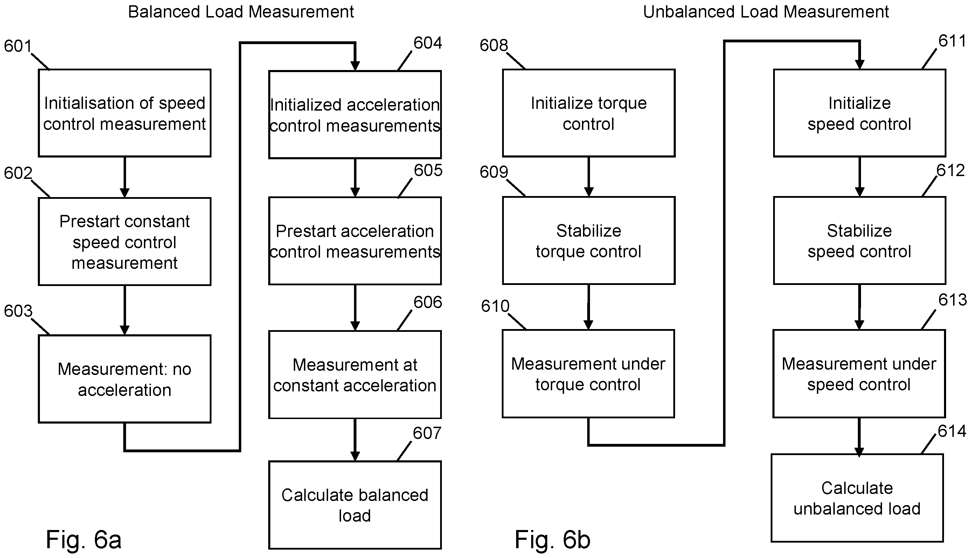

Figure 6a illustrates a schematic flow diagram illustrating an example state machine representing a computer-implemented method of estimating a balanced load encompassing the balanced load measurement method described above, as performed by a motor controller. A schematic flow diagram illustrating an example state machine representing a computer-implemented method of establishing an unbalanced load encompassing the unbalanced load measurement method described above is depicted in Figure 6b. The process in Figure 6a may be followed by the process in Figure 6b, i.e. with step 608 following directly after step 607. The processes may alternatively be performed separately or in reverse order.

For measuring the balanced load, the process starts at step 601 with initialising a constant speed control measurement. Once this step is completed, at step 602 a stabilisation step is performed, followed by at step 603 a constant speed control measurement, for example according to the example shown in Figure 3 in the first time period 301, which results in a measure of torque at no acceleration, $T_{AVG0}$, calculated according to Equation 38 Once this measurement is completed, at step 604 an acceleration control measurement is initialised and, following a stabilisation period at step 605, corresponding to the second time period 302 in Figure 3, a measurement at constant acceleration is performed, corresponding to the third time period 303 in Figure 3, resulting in a measure of average torque $T_{AVG}$ under constant acceleration. At step 607, a balanced load **m** ($\hat{m}_{est}$) calculated based on Equations 43, 44 and 45.

For measuring the unbalanced load, the process according to that described above with reference to Figures 4 and 5 starts at step 608 with initialising a constant torque control setting, followed in step 609 by a stabilisation period. A measurement under torque control is then carried out at step 610. At step 611 speed control is initialised and stabilised at step 612. A measurement is then carried out under speed control at step 613, followed by calculations of the unbalanced load.

At the start of this process, $S_{360\,T}N_{360\,T}$, $S_{180\,T}N_{180\,T}$ are initialized to 0. After a stabilisation delay (step 609), the speed minimum and maximum are searched and $\alpha$(*Speed Max*) is stored. A measurement under constant torque control is then carried out (step 610). The start angle $\alpha_{11}(0)$ for this is searched based on Equation 65. During the Sum360 state, the $S_{360\,T}$ iterations are calculated based on Equation 47 and $N_{360\,T}$ is incremented with a sampling period $t_s$. In the Sum360, Sum 180 state, the $S_{360\,T}$ iterations and $N_{360\,T}$ increments are provided together with $S_{180\,T}$ iterations based on Equation 49 with $N_{180\,T}$ increments. The angular speed $\omega_{BUF}(\alpha_k - 180)$ and torque $T_{BUF}(\alpha_k - 180)$ are buffered (for future maximum search) after reaching an interval of 360 degree from $\alpha_{11}(0)$, then $\Delta\omega$ and $S_{AC180}$ are calculated. The measurements of $\Delta\omega$ and $S_{AC180}$ are updated with a maximum search according to Equation 66. Equation 65 is provided when $\hat{m}_{est}$ from the balanced load measurement process is used. The speed difference is updated such that $\Delta_{180}\hat{\omega}_{\varepsilon A}(\alpha_k) = \omega(\alpha_k) - \omega_{BUF}(\alpha_k -$

$$180) - \frac{1}{2} \cdot \left( \omega_{(\alpha1+360)} - \omega_{(\alpha1)} \right)$$ , according to Equation 67 and the sum $S_{180Ta}(\alpha_{(k)}) = S_{180Ta}(\alpha_{(k-1)}) + (T(\alpha_{(k)}) -$

$T_{AVG} - T_{BUF}(\alpha_{(k)} - 180))$ according to Equation 68 with actual and previously buffered samples until the buffer ends. The $\Delta\omega$ ($\alpha_k$) and $S_{AC180}(\alpha_k)$ for index k according to Equation 65 $F(k) = $ max is stored for final calculations. This is also depicted in Figure 5. Final $\Delta N_{360\,1}$ $S_{180\,Tac1}$ and $\Delta_{180}\hat{\omega}_{\varepsilon AC1}$ are calculated and memorized based on Equations 59 and 47. The $\Delta_{180}\hat{\omega}_{\varepsilon AC1} = \Delta\omega$ and $S_{180\,Tac1} = S_{AC180}$ are calculated and $\Delta N_{360\,1} = \Delta N_{360}$ is stored. The Start Angle $\alpha_{21}(0)$ is set and then the constant speed control (steps 611-613) is executed according to the process described above. First, $S_{360\,T}N_{360\,T}$, $S_{180\,T}N_{180\,T}$ are initialized to 0 (step 611). After a stabilization delay (step 612), measurement under speed control (step 613) is executed. The Start Angle $\alpha_{21}(0)$ is searched based on Equation 65. During the Sum360 state, the $S_{360\,T}$ iterations are calculated based on Equation 47 and $N_{360\,T}$ incremented with a sampling period $t_s$.

In the Sum360, Sum 180 state, the $S_{360\,T}$ iterations and $N_{360\,T}$ increments are provided together with $S_{180\,T}$ iteration based on Equation 49 with $N_{180T}$ increments. After a 360 degree interval from $\alpha_{11}(0)$ is reached, the $\Delta_{180}\hat{\omega}_{\varepsilon AC2} = \Delta\omega$ and $S_{180\,Tac2} = S_{AC180}$ are calculated and $\Delta N_{360\,2} = \Delta N_{360}$ Finally, calculation of the unbalanced load $\Delta m$ is provided from $\Delta N_{360\,1}$, $\Delta N_{360\,2}$ $S_{180\,Tac1}$, $S_{180\,Tac2}$, $\Delta_{180}\hat{\omega}_{\varepsilon AC1}$ and $\Delta_{180}\hat{\omega}_{\varepsilon AC2}$ based on Equation 63. If the second method for calculating the balanced load is used, the balanced load can then be calculated based on Equation 70.

This process described herein is primary designed for use in a motor controller for a washing machine. The torque necessary for the sampling process may be derived based on Equations 71 and 72, i.e. that the motor torque $T_m$ is a function of motor current and that the function is generally a linear relationship. The motor current may therefore be sampled to determine the motor torque. The position and speed information may be provided using a sensor such as an encoder or other type of absolute position sensor on the rotor. Instead of using an encoder or position sensor, the speed can alternatively be estimated using a sensorless algorithm which estimates the speed based on phase current and voltages quantities. The speed estimation bandwidth needs to be sufficiently fast, so that the measured speed and any errors are below the speed variations caused by the unbalanced load.

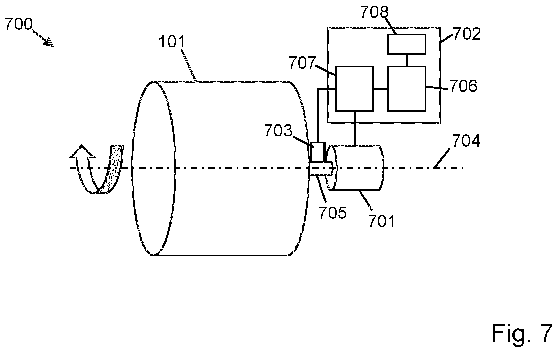

Figure 7 is a schematic drawing of an assembly 700, which may form part of a washing machine, the assembly 700 comprising a drum 101 connected to be driven about a horizontal axis 704 by an electric motor 701. The electric motor 701 is controlled by a motor controller 702, which provides drive signals to the motor 701 and receives or determines a torque measurement on the rotor shaft 705. As described above, the torque may be determined from a measure of current through the motor 701 or may be measured by a torque sensor in the motor 701. A rotational sensor 703 may be provided on the rotor shaft 705 to measure the angular position and rotational speed of the rotor shaft 705.

The motor controller 702 comprises a processor 706, input/output (I/O) interface 707 and memory 708. The I/O interface provides a drive signal to the motor 701 and receives information from the motor 701 and rotational sensor 703. The processor 706 processes signals received from and generates drive signals for the motor 701. The memory 708 is used for storing information and instructions for operating the controller 702.

The process described herein performs integration of the motor torque applied in one revolution of a mechanical system (which may be a washing machine drum or more generally a rotor of an electric motor) and calculates average torque in one mechanical revolution (i.e. over 360 degrees of rotation) and alternating torque over 180 degrees. Based on measurements carried out under torque control and speed control, an unbalanced load and a balanced load can be calculated.

Unbalanced load detection is an important factor particularly for washing machine control but may also apply to other rotary device applications having unbalanced loads. The process described herein optimizes for cost of the overall solution by not requiring additional sensors (e.g. an accelerometer) for detecting an unbalanced load condition. Instead, electrical signals are used that are normally available in the system and used by the motor control system for driving a motor.

From reading the present disclosure, other variations and modifications will be apparent to the skilled person. Such variations and modifications may involve equivalent and other features which are already known in the art of rotary machine control systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method of estimating loads in a rotary machine comprising a drum (101) containing a plurality of load portions ($102_{1-3}$) and driven for rotation about a rotation axis (104) by a motor (701), the method comprising:
   estimating an unbalanced load by:

   i) measuring a rotational speed of the drum (101) during a first time period (402, 501) over a first complete rotation of the drum (101) while the motor (701) is driven under constant torque control;
   ii) determining a maximum speed angle during the first time period (402, 501) as a rotational angle of the drum over the first time period (402, 501) at which the rotational speed of the drum (101) is a maximum;
   iii) measuring torque and rotational speed during a second time period (405, 502) over a second complete rotation of the drum (101) starting at the maximum speed angle offset by a predetermined advance angle while the motor (701) is driven under constant torque control; and
   iv) calculating an estimated unbalanced load of the drum from measurements of torque and rotational speed over the second time period and a difference in rotational speed over first and second halves of the second time period (405, 502).

2. The method of claim 1, wherein the estimated unbalanced load $\Delta$m is calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, r is a radius of the drum (101), $g$ is a gravitational acceleration, $\omega_{01}$ is a rotational speed at the start of the second time period, $\omega_{02}$ is a rotational speed at the end of the second time period,

$S_{180Ta_1}$ is a sum of torque samples over the first half of the second time period, $S_{180Ta_2}$ is a sum of torque samples over the second half of the second time period, $\Delta_{180}\hat{\omega}_{\varepsilon A_1}$ is a difference in rotational speed over the first half of the second time period and $\Delta_{180}\hat{\omega}_{\varepsilon A_2}$ is a difference in rotational speed over the second half of the second time period.

3. The method of claim 2, wherein the predetermined advance angle $\alpha_{advanced}$ is calculated as:

$$\alpha_{advanced} = \alpha(Speed\ Max) - \alpha_{11}(0) = \frac{N_b \cdot t_s \cdot \omega_{0x}}{2}$$

where $\alpha(Speed\ Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

4. The method of any preceding claim, further comprising calculating an estimated balanced load m from:

$$m = \frac{t_s}{r^2} \cdot \frac{\omega_{02} \cdot S_{180Ta_2} - \omega_{01} \cdot S_{180Ta_1}}{\omega_{02} \cdot \Delta_{180}\hat{\omega}_{\varepsilon A_2} - \omega_{01} \cdot \Delta_{180}\hat{\omega}_{\varepsilon A_1}}$$

5. The method of any one of claims 1 to 3, further comprising calculating an estimated balanced load by:

    i) measuring a torque during a third time period (301) over a third complete rotation of the drum (101) while the motor (701) is driven under constant speed control to determine an average friction torque;
    ii) measuring the torque and a rotation speed of the drum (101) during a fourth time period (302) over a fourth complete rotation of the drum (101) while the motor (701) is driven under constant acceleration control to determine an average acceleration torque;
    iii) subtracting the average friction torque from the average acceleration torque to obtain a corrected average acceleration torque; and
    iv) calculating the estimated balanced load of the drum from the corrected acceleration torque, a difference in rotation speed over the second time period and a radius of the drum.

6. The method of claim 5, wherein the estimated balanced load *m* of the drum (101) is calculated from:

$$m \cong \frac{t_s}{r^2} \cdot \frac{S_{360\,Tmd\varepsilon0_1}}{\Delta_{360}\omega_{\varepsilon0_1}}$$

where $t_s$ is a measurement sampling period, r is the radius of the drum, $S_{360\,Tmd\varepsilon0_1}$ is a sum of measured torque samples over the fourth time period and $\Delta_{360}\hat{\omega}_{\varepsilon0_1}$ is the difference in rotation speed over the fourth time period.

7. The method of any preceding claim, wherein measuring the torque comprises measuring an electric current through the motor and converting the measured electric current to a measure of torque, the torque optionally being measured as a linear function of the measured electric current.

8. The method of any preceding claim, wherein the rotational speed and position are derived from a rotational sensor on the rotor.

9. A motor controller (702) for a rotary machine (700) comprising a drum (101) for containing a plurality of load portions ($102_{1-3}$) driven for rotation about a rotation axis (104) by a motor (701), the motor controller (702) being configured to estimate an unbalanced load on the drum (101) by:

    i) measuring a rotational speed of the drum (101) during a first time period (402, 501) over a first complete rotation of the drum (101) while the motor (701) is driven under constant torque control;
    ii) determining a maximum speed angle during the first time period (402, 501) as a rotational angle of the drum over the first time period (402, 501) at which the rotational speed of the drum (101) is a maximum;
    iii) measuring torque and rotational speed during a second time period (405, 502) over a second complete rotation of the drum (101) starting at the maximum speed angle offset by a predetermined advance angle while the motor (701) is driven under constant torque control; and

iv) calculating an estimated unbalanced load of the drum from measurements of torque and rotational speed over the second time period and a difference in rotational speed over first and second halves of the second time period (405, 502).

10. The motor controller (702) of claim 9, wherein the estimated unbalanced load $\Delta m$ is calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, r is a radius of the drum (101), $g$ is a gravitational acceleration, $\omega_{01}$ is a rotational speed at the start of the second time period, $\omega_{02}$ is a rotational speed at the end of the second time period, $S_{180Ta_1}$ is a sum of torque samples over the first half of the second time period, $S_{180Ta_2}$ is a sum of torque samples over the second half of the second time period, $\Delta_{180}\hat{\omega}_{\varepsilon A2}$ is a difference in rotational speed over the first half of the second time period and $\Delta_{180}\hat{\omega}_{\varepsilon A2}$ is a difference in rotational speed over the second half of the second time period.

11. The motor controller of claim 10, wherein the predetermined advance angle $\alpha_{advanced}$ is calculated as:

$$\alpha_{advanced} = \alpha(Speed\ Max) - \alpha_{11}(0) = \frac{N_b \cdot t_s \cdot \omega_{0x}}{2}$$

where $\alpha(Speed\ Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

12. The motor controller (702) of any one of claims 9 to 11, wherein the motor controller is further configured to calculate an estimated balanced load m from:

$$m = \frac{t_s}{r^2} \cdot \frac{\omega_{02} \cdot S_{180Ta_2} - \omega_{01} \cdot S_{180Ta_1}}{\omega_{02} \cdot \Delta_{180}\widehat{\omega}_{\varepsilon A_2} - \omega_{01} \cdot \Delta_{180}\widehat{\omega}_{\varepsilon A_1}}$$

13. The motor controller (702) of any one of claims 9 to 11, wherein the motor controller (702) is further configured to calculate an estimated balanced load by:

i) measuring a torque during a third time period (301) over a third complete rotation of the drum (101) while the motor (701) is driven under constant speed control to determine an average friction torque;

ii) measuring the torque and a rotation speed of the drum (101) during a fourth time period (302) over a fourth complete rotation of the drum (101) while the motor (701) is driven under constant acceleration control to determine an average acceleration torque;

iii) subtracting the average friction torque from the average acceleration torque to obtain a corrected average acceleration torque; and

iv) calculating the estimated balanced load of the drum from the corrected acceleration torque, a difference in rotation speed over the second time period and a radius of the drum.

14. The motor controller (702) of claim 13, wherein the estimated balanced load *m* of the drum (101) is calculated from:

$$m \cong \frac{t_s}{r^2} \cdot \frac{S_{360\,Tmd\varepsilon0_1}}{\Delta_{360}\omega_{\varepsilon0_1}}$$

where $t_s$ is a measurement sampling period, *r* is the radius of the drum, $S_{360\,Tmd\varepsilon0_1}$ is a sum of measured torque samples over the fourth time period and $\Delta_{360}\hat{\omega}_{\varepsilon0_1}$ is the difference in rotation speed over the fourth time period.

**15.** A computer program comprising instructions for causing a motor controller for a rotary machine to perform the method according to any one of claims 1 to 8.

**Amended claims in accordance with Rule 137(2) EPC.**

**1.** A method of estimating loads in a rotary machine comprising a drum (101) containing a plurality of load portions ($102_{1-3}$) and driven for rotation about a horizontal rotation axis (104) by a motor (701), the method comprising: estimating an unbalanced load by:

 i) measuring a rotational speed of the drum (101) during a first time period (402, 501) over a first complete rotation of the drum (101) while the motor (701) is driven under constant torque control;
 ii) determining a maximum speed angle during the first time period (402, 501) as a rotational angle of the drum over the first time period (402, 501) at which the rotational speed of the drum (101) is a maximum;
 iii) measuring torque and rotational speed during a second time period (405, 502) over a second complete rotation of the drum (101) starting at the maximum speed angle offset by a predetermined advance angle while the motor (701) is driven under constant torque control; and
 iv) calculating an estimated unbalanced load of the drum from measurements of torque and rotational speed over the second time period and a difference in rotational speed over first and second halves of the second time period (405, 502).

**2.** The method of claim 1, wherein the estimated unbalanced load $\Delta m$ is calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180 T a_1} - \Delta_{180}\widehat{\omega}_{\varepsilon A_1} \cdot S_{180 T a_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, r is a radius of the drum (101), $g$ is a gravitational acceleration, $\omega_{01}$ is a rotational speed at the start of the second time period, $\omega_{02}$ is a rotational speed at the end of the second time period, $S_{180 T a_1}$ is a sum of torque samples over the first half of the second time period, $S_{180 T a_2}$ is a sum of torque samples over the second half of the second time period, $\Delta_{180}\hat{\omega}_{\varepsilon A_1}$ is a difference in rotational speed over the first half of the second time period and $\Delta_{180}\hat{\omega}_{\varepsilon A_2}$ is a difference in rotational speed over the second half of the second time period.

**3.** The method of claim 2, wherein the predetermined advance angle $\alpha_{dvanced}$ is calculated as:

$$\alpha_{advanced} = \alpha(Speed\ Max) - \alpha_{11}(0) = \frac{N_b \cdot t_s \cdot \omega_{0x}}{2}$$

where $\alpha(Speed\ Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

**4.** The method of any preceding claim, further comprising calculating an estimated balanced load m from:

$$m = \frac{t_s}{r^2} \cdot \frac{\omega_{02} \cdot S_{180 T a_2} - \omega_{01} \cdot S_{180 T a_1}}{\omega_{02} \cdot \Delta_{180}\widehat{\omega}_{\varepsilon A_2} - \omega_{01} \cdot \Delta_{180}\widehat{\omega}_{\varepsilon A_1}}$$

**5.** The method of any one of claims 1 to 3, further comprising calculating an estimated balanced load by:

 i) measuring a torque during a third time period (301) over a third complete rotation of the drum (101) while the motor (701) is driven under constant speed control to determine an average friction torque;
 ii) measuring the torque and a rotation speed of the drum (101) during a fourth time period (302) over a fourth complete rotation of the drum (101) while the motor (701) is driven under constant acceleration control to determine an average acceleration torque;
 iii) subtracting the average friction torque from the average acceleration torque to obtain a corrected average acceleration torque; and
 iv) calculating the estimated balanced load of the drum from the corrected acceleration torque, a difference in rotation speed over the second time period and a radius of the drum.

6. The method of claim 5, wherein the estimated balanced load $m$ of the drum (101) is calculated from:

$$m \cong \frac{t_s}{r^2} \cdot \frac{S_{360\,Tmd\varepsilon0_1}}{\Delta_{360}\omega_{\varepsilon0_1}}$$

where $t_s$ is a measurement sampling period, $r$ is the radius of the drum, $S_{360\,Tmd\varepsilon0_1}$ is a sum of measured torque samples over the fourth time period and $\Delta_{360}\omega_{\varepsilon0_1}$ is the difference in rotation speed over the fourth time period.

7. The method of any preceding claim, wherein measuring the torque comprises measuring an electric current through the motor and converting the measured electric current to a measure of torque, the torque optionally being measured as a linear function of the measured electric current.

8. The method of any preceding claim, wherein the rotational speed and position are derived from a rotational sensor on the rotor.

9. A motor controller (702) for a rotary machine (700) comprising a drum (101) for containing a plurality of load portions ($102_{1-3}$) driven for rotation about a horizontal rotation axis (104) by a motor (701), the motor controller (702) being configured to estimate an unbalanced load on the drum (101) by:

   i) measuring a rotational speed of the drum (101) during a first time period (402, 501) over a first complete rotation of the drum (101) while the motor (701) is driven under constant torque control;
   ii) determining a maximum speed angle during the first time period (402, 501) as a rotational angle of the drum over the first time period (402, 501) at which the rotational speed of the drum (101) is a maximum;
   iii) measuring torque and rotational speed during a second time period (405, 502) over a second complete rotation of the drum (101) starting at the maximum speed angle offset by a predetermined advance angle while the motor (701) is driven under constant torque control; and
   iv) calculating an estimated unbalanced load of the drum from measurements of torque and rotational speed over the second time period and a difference in rotational speed over first and second halves of the second time period (405, 502).

10. The motor controller (702) of claim 9, wherein the estimated unbalanced load $\Delta m$ is calculated from:

$$\Delta m = \frac{t_s}{r \cdot g \cdot (-2)} \cdot \omega_{01} \cdot \omega_{02} \cdot \frac{\Delta_{180}\widehat{\omega}_{\varepsilon A_2} \cdot S_{180Ta_1} - \Delta_{180}\widehat{\omega}_{\varepsilon A_1} \cdot S_{180Ta_2}}{\omega_{02} \cdot \Delta_{180}\widehat{\omega}_{\varepsilon A_2} - \omega_{01} \cdot \Delta_{180}\widehat{\omega}_{\varepsilon A_1}}$$

where $t_s$ is a measurement sampling period, $r$ is a radius of the drum (101), $g$ is a gravitational acceleration, $\omega_{01}$ is a rotational speed at the start of the second time period, $\omega_{02}$ is a rotational speed at the end of the second time period, $S_{180Ta_1}$ is a sum of torque samples over the first half of the second time period, $S_{180Ta_2}$ is a sum of torque samples over the second half of the second time period, $\Delta_{180}\widehat{\omega}_{\varepsilon A_1}$ is a difference in rotational speed over the first half of the second time period and $\Delta_{180}\widehat{\omega}_{\varepsilon A_2}$ is a difference in rotational speed over the second half of the second time period.

11. The motor controller of claim 10, wherein the predetermined advance angle $\alpha_{advanced}$ is calculated as:

$$\alpha_{advanced} = \alpha(Speed\,Max) - \alpha_{11}(0) = \frac{N_b \cdot t_s \cdot \omega_{0x}}{2}$$

where $\alpha(Speed\,Max)$ is the maximum speed angle, $\alpha_{11}(0)$ is the rotation angle at the start of the second time period, $N_b$ is a number of samples over the first half of the second time period, $\omega_{0x}$ is the rotational speed at the start of the second time period.

12. The motor controller (702) of any one of claims 9 to 11, wherein the motor controller is further configured to calculate an estimated balanced load m from:

$$m = \frac{t_s}{r^2} \cdot \frac{\omega_{02} \cdot S_{180Ta_2} - \omega_{01} \cdot S_{180Ta_1}}{\omega_{02} \cdot \Delta_{180}\widehat{\omega}_{\varepsilon A_2} - \omega_{01} \cdot \Delta_{180}\widehat{\omega}_{\varepsilon A_1}}$$

13. The motor controller (702) of any one of claims 9 to 11, wherein the motor controller (702) is further configured to calculate an estimated balanced load by:

> i) measuring a torque during a third time period (301) over a third complete rotation of the drum (101) while the motor (701) is driven under constant speed control to determine an average friction torque;
> ii) measuring the torque and a rotation speed of the drum (101) during a fourth time period (302) over a fourth complete rotation of the drum (101) while the motor (701) is driven under constant acceleration control to determine an average acceleration torque;
> iii) subtracting the average friction torque from the average acceleration torque to obtain a corrected average acceleration torque; and
> iv) calculating the estimated balanced load of the drum from the corrected acceleration torque, a difference in rotation speed over the second time period and a radius of the drum.

14. The motor controller (702) of claim 13, wherein the estimated balanced load $m$ of the drum (101) is calculated from:

$$m \cong \frac{t_s}{r^2} \cdot \frac{S_{360\,Tmd\varepsilon0_1}}{\Delta_{360}\omega_{\varepsilon0_1}}$$

where $t_s$ is a measurement sampling period, $r$ is the radius of the drum, $S_{360\,Tmd\varepsilon0_1}$ is a sum of measured torque samples over the fourth time period and $\Delta_{360}\omega_{\varepsilon0_1}$ is the difference in rotation speed over the fourth time period.

15. A computer program comprising instructions for causing a motor controller for a rotary machine to perform the method according to any one of claims 1 to 8.

Fig. 1b

Fig. 1a

Fig. 2

Fig. 3

Stabilization Delay   Max. Speed Detection   Torque Control Measurement   Stabilization Delay   Speed Control Measurement   Calculation

Speed

Torque

Drum Angle

Rotation Angle

Speed IMax

360 (-Advance) deg

360 deg

360 deg

360 deg

360 deg

$\alpha_{11}$   $\alpha_{21}$   $\alpha_{12}$   $\alpha_{22}$

401   402   403   404   405   406   407   408

411   412   413

Fig. 4

Fig. 5

Balanced Load Measurement

Unbalanced Load Measurement

601
Initialisation of speed
control measurement

602
Prestart constant
speed control
measurement

603
Measurement: no
acceleration

604
Initialized acceleration
control measurements

605
Prestart acceleration
control measurements

606
Measurement at
constant acceleration

607
Calculate balanced
load

Fig. 6a

608
Initialize torque
control

609
Stabilize
torque control

610
Measurement under
torque control

611
Initialize
speed control

612
Stabilize
speed control

613
Measurement under
speed control

614
Calculate
unbalanced load

Fig. 6b

EP 4 703 509 A1

31

Fig. 7

Europäisches
Patentamt
European
Patent Office
Office européen
des brevets

# EUROPEAN SEARCH REPORT

**Application Number**

EP 24 19 7476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 60 2006 000888 T2 (WHIRLPOOL CO [US]) 25 June 2009 (2009-06-25) * paragraph [0028]; claims; figures * | 1-15 | INV. D06F33/48 D06F34/16 |
| A | EP 2 460 921 B1 (DIEHL AKO STIFTUNG GMBH & CO [DE]) 20 November 2013 (2013-11-20) * paragraph [0031]; claims; figures * | 1-15 | ADD. D06F37/30 |
| A | EP 3 330 422 B1 (GUANGDONG WELLING MOTOR MFG CO [CN]) 7 April 2021 (2021-04-07) * claims * | 1-15 | |
| A | US 2005/204482 A1 (MURRAY PETER [GB] ET AL) 22 September 2005 (2005-09-22) * paragraphs [0042], [0117]; claims; figures * | 1-15 | |

**TECHNICAL FIELDS SEARCHED (IPC)**

D06F

The present search report has been drawn up for all claims

| Place of search | Date of completion of the search | Examiner |
|---|---|---|
| Munich | 5 February 2025 | Popara, Velimir |

EPO FORM 1503 03.82 (P04C01)

## ANNEX TO THE EUROPEAN SEARCH REPORT
## ON EUROPEAN PATENT APPLICATION NO.

EP 24 19 7476

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | | Publication date | Patent family member(s) | | Publication date |
|---|---|---|---|---|---|
| DE 602006000888 T2 | | 25-06-2009 | AU | 2006200617 A1 | 23-11-2006 |
| | | | BR | PI0601510 A | 17-07-2007 |
| | | | CA | 2535677 A1 | 27-10-2006 |
| | | | CN | 1854377 A | 01-11-2006 |
| | | | DE | 602006000888 T2 | 25-06-2009 |
| | | | EP | 1736590 A1 | 27-12-2006 |
| | | | NZ | 545475 A | 27-07-2007 |
| | | | US | 2006242768 A1 | 02-11-2006 |
| | | | US | 2010241276 A1 | 23-09-2010 |
| EP 2460921 | B1 | 20-11-2013 | DE | 102010053104 A1 | 06-06-2012 |
| | | | EP | 2460921 A2 | 06-06-2012 |
| | | | PL | 2460921 T3 | 30-05-2014 |
| EP 3330422 | B1 | 07-04-2021 | BR | 112018001925 A2 | 25-09-2018 |
| | | | EP | 3330422 A1 | 06-06-2018 |
| | | | JP | 6648255 B2 | 14-02-2020 |
| | | | JP | 2018520814 A | 02-08-2018 |
| | | | KR | 20180026762 A | 13-03-2018 |
| | | | US | 2018148880 A1 | 31-05-2018 |
| | | | WO | 2017020164 A1 | 09-02-2017 |
| US 2005204482 | A1 | 22-09-2005 | CN | 101213335 A | 02-07-2008 |
| | | | EP | 1888831 A1 | 20-02-2008 |
| | | | US | 2005204482 A1 | 22-09-2005 |
| | | | WO | 2006124535 A1 | 23-11-2006 |

EPO FORM P0459

For more details about this annex : see Official Journal of the European Patent Office, No. 12/82